# EUROPÄISCHE PATENTANMELDUNG

(11) **EP 1 560 324 A1**
(43) Veröffentlichungstag der Anmeldung: **03.08.2005**
(21) Anmeldenummer: 04031003.9
(22) Anmeldetag: 30.12.2004
(51) Int. Cl.: H02M 5/16, H02J 7/02, H02M 5/27

(54) **Batterieladegerät mit Direktumrichter**

(30) Priorität: 29.01.2004 DE 102004004369
(71) Anmelder: Jungheinrich Aktiengesellschaft, 22047 Hamburg (DE)
(72) Erfinder: Schweer, Jann, Dr.-Ing., 6072 Sachseln (CH); Mänken, Frank, Dr., 24558 Henstedt-Ulzburg (DE)
(74) Vertreter: Patentanwälte Hauck, Graalfs, Wehnert, Döring, Siemons, Schildberg

(57) **Zusammenfassung**

Batterieladegerät, insbesondere zur Anordnung auf einem Flurförderzeug, wobei es einen an das Netz anschließbaren Direktumrichter aufweist, der den Wechsel- oder Drehstrom des Netzes in einen Wechsel- oder Drehstrom höherer Frequenz umwandelt und unmittelbar mit einem Übertrager verbunden ist, dessen Sekundärwicklung einen Gleichrichter speist.

## Beschreibung

Die Erfindung bezieht sich auf ein Batterieladegerät, insbesondere zur Anordnung auf einem Flurförderzeug, nach dem Patentanspruch.

Die Batterien batteriebetriebener Flurförderzeuge müssen ständig neu aufgeladen werden. Zu diesem Zweck sind spezielle Ladegeräte vorgesehen, die zumeist stationär in der Nähe des Einsatzortes des Flurförderzeugs angeordnet sind. Herkömmliche Ladegeräte weisen übliche Gleichrichterschaltungen auf, welche die Netzwechselspannung in Gleichspannung umwandeln. Geeignete Schaltungsvorkehrungen sorgen dafür, daß das Netz nicht mit zu hoher Blindleistung und unerwünschten Oberwellen belastet wird. Es ist ferner bekannt, Hochfrequenzladegeräte vorzusehen, die den Wechselstrom aus dem Netz zunächst mit Hilfe eines AC/DC-Wandlers gleichrichten und dann mittels eines DC/AC-Wandlers in eine Spannung höherer Frequenz wechselrichten. Die Spannung höherer Frequenz wird dann erneut gleichgerichtet. Vorteilhaft bei derartigen Ladegeräten ist der relativ kleine Bauraum.

Der Erfindung liegt die Aufgabe zugrunde, ein Batterieladegerät, insbesondere zur Anordnung auf einem Flurförderzeug, zu schaffen, das gegenüber herkömmlichen Ladegeräten im Aufwand verringert ist, eine geringere Verlustleistung aufweist und gleichwohl einen geringen Bauraum erfordert.

Diese Aufgabe wird durch die Merkmale des Patentanspruchs gelöst.

Bei der Erfindung weist das Ladegerät ein an das Netz anschließbaren Direktumrichter auf, der den Wechsel- oder Drehstrom des Netzes in einen Wechsel- oder Drehstrom höherer Frequenz umwandelt. Der Direktumrichter ist an einen Transformator angeschlossen, der eine übliche Gleichrichterschaltung speist.

Direktumrichter sind an sich bekannt. Sie werden üblicherweise mit einem Gleichstromzwischenkreis betrieben. Bei der Erfindung hingegen ist ein derartiger Gleichstromzwischenkreis nicht erforderlich, vielmehr wird der Dreh- oder Wechselstrom des Netze direkt in den Dreh- oder Wechselstrom höherer Frequenz umgewandelt, z.B. in eine Frequenz von 150 kHz zur Speisung des Transformators.

Die erfindungsgemäße Schaltungsanordnung hat den Vorteil, daß die Zahl der benötigten Halbleiterbauelemente reduziert wird. Dies betrifft insbesondere die für den Direktumrichter. Hierfür werden an sich bekannte bidirektionale schaltbare Halbleiterbauelemente benötigt. Bei einem Drehstrom-/Wechselstromumrichter werden sechs und bei einem Wechselstromübertrager und Speisung aus einem Wechselstromnetz vier Schalter benötigt. Ein weiterer Vorteil der Erfindung besteht darin, daß die Verlustleistung im Ladegerät gering ist, da nicht mehr so viele Durchlaßspannungen von Halbleitern zu überwinden sind.

Ein Ausführungsbeispiel der Erfindung wird nachfolgend anhand einer Zeichnung näher erläutert.

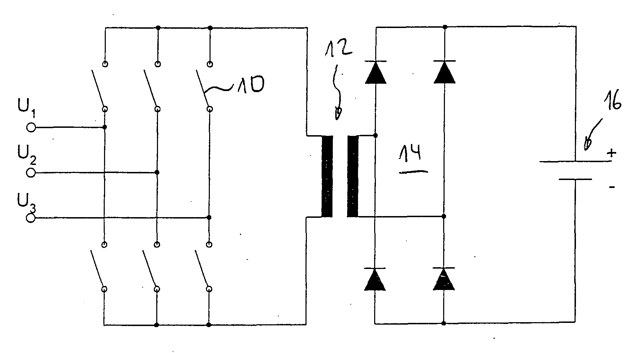

Die einzige Figur zeigt eine Schaltungsanordnung eines Ladegeräts nach der Erfindung.

Die in der Figur dargestellte Schaltungsanordnung ist mit einem Drehstromnetz verbindbar, wobei die Klemmen mit U₁, U₂ und U₃ bezeichnet sind. Die Klemmen U₁, bis U₃ sind mit drei parallelen Zweigen verschaltet, in denen jeweils zwei elektronische Schalter 10 in Form von bidirektionalen Halbleiterbauelementen angeordnet sind. Die Schalter 10 werden durch eine geeignete Steuerung angesteuert zwecks Erzeugung eines Drehstroms deutlich höherer Frequenz. Während die Netzfrequenz 50 Hz beträgt, wird z.B. eine Hochfrequenz von 150 kHz erzeugt. Die beschriebene Parallelschaltung ist mit der Primärwicklung eines Übertragers 12 verbunden, dessen Sekundärwicklung an eine Gleichrichterbrückenschaltung 14 angeschlossen ist. Diese versorgt an ihren Ausgangsklemmen eine Batterie 16, beispielsweise die Batterie eines Flurförderzeugs.

Eine derartige Schaltung eignet sich besonders für die Aufnahme an Bord eines Flurförderzeugs. Das Flurförderzeug kann dann zwecks Aufladung in die Nähe eines Netzanschlusses fahren, um die Batterie aufzuladen, ohne daß erforderlich ist, die Batterie aus dem Fahrzeug zu entfernen und durch eine andere auszutauschen.

## Patentansprüche

1. Batterieladegerät, insbesondere zur Anordnung auf einem Flurförderzeug, **dadurch gekennzeichnet, daß** es einen an das Netz anschließbaren Direktumrichter aufweist, der den Wechsel- oder Drehstrom des Netzes in einen Wechsel- oder Drehstrom höherer Frequenz umwandelt und unmittelbar mit einem Übertrager (12) verbunden ist, dessen Sekundärwicklung einen Gleichrichter (14) speist.
